# FASCICULE DE BREVET EUROPEEN

(11) **EP 0 685 415 B1**
(45) Date de publication et mention de la délivrance du brevet: **26.08.1998**
(21) Numéro de dépôt: 95401235.7
(22) Date de dépôt: 29.05.1995
(51) Int. Cl.: B65G 69/18

(54) **Dispositif d'interface pour le transfert de produits fluides entre deux conteneurs**
Verbindungsvorrichtung für die Übertragung von flüssigen Produkten zwischen Behältern
Interface device for the transfer of fluid products between two containers

(30) Priorité: 31.05.1994 FR 9406608
(43) Date de publication de la demande: 06.12.1995
(73) Titulaire: LA CALHENE, F-78142 Velizy-Villacoublay Cédex (FR)
(72) Inventeur: Glachet, Charles, F-41100 Vendome (FR)
(74) Mandataire: Dubois-Chabert, Guy

(56) Documents cités:
- DE-C- 1 199 186
- FR-A- 2 673 990
- US-A- 3 605 831
- US-A- 3 896 855

## Description

L'invention concerne un dispositif d'interface conçu pour assurer, de façon étanche, le transfert de produits fluides tels que des poudres entre deux conteneurs.

Il est à noter que le mot "conteneur" désigne, dans l'ensemble du texte, toute enceinte étanche délimitant un volume clos, quelles que soient la forme, les dimensions et les fonctions (stockage, transport, réaction chimique, etc.) données à ce volume.

Un tel dispositif d'interface peut être utilisé dans de nombreux domaines industriels tels que les industries pharmaceutique et alimentaire, notamment afin d'assurer le transfert de produits en poudre entre un conteneur de stockage ou un réacteur chimique équipé d'une trémie et un conteneur mobile servant à transférer le produit sur un autre site.

Dans le document FR-A-2 673 990, on a proposé un dispositif d'interface comprenant un caisson étanche pourvu de deux ouvertures alignées apte à être raccordées respectivement de façon étanche sur chacun des conteneurs. L'une des ouvertures est équipée d'une porte apte à être accouplée par un système à baïonnette, à une porte d'un conteneur de transfert, pour former un système de transfert étanche à double porte. Des moyens de manoeuvre placés à l'intérieur du caisson étanche permettent de commander, par rotation, l'ouverture et la fermeture de la double porte ainsi que son effacement par translation à l'intérieur du caisson étanche. A la fin de cet effacement, un tube de transfert télescopique est amené dans l'alignement des deux ouvertures du caisson étanche. Les moyens de manoeuvre permettent alors de commander l'allongement de ce tube de transfert télescopique, de façon à mettre en communication de manière étanche les deux conteneurs.

Ce dispositif d'interface pour être monté sur un conteneur de stockage ou un réacteur chimique équipé d'une trémie, pour former un sas sur lequel peut être raccordé de façon étanche un conteneur mobile servant à transférer le produit sur un autre site.

Le caractère télescopique du tube de transfert se traduit par la présence de zones de rétention. En effet, les tronçons du tube de transfert télescopique présentent nécessairement des diamètres intérieurs différents sur une partie au moins de leur longueur. Lorsque le produit fluide transféré par le dispositif d'interface est une poudre, une certaine quantité de poudre peut rester bloquée dans ces zones de rétention. Le dispositif d'interface décrit dans le document FR-A- 2 673 990 ne peut donc être utilisé que selon une orientation unique dans laquelle l'axe du tube de transfert est orienté verticalement et dans le sens pour lequel la rétention de poudre est minimale.

L'invention a principalement pour objet un dispositif d'interface dont la conception originale lui permet d'assurer le transfert de produits fluides tels que des poudres selon une orientation quelconque, grâce à la suppression des zones de rétention dans le tube de transfert.

Conformément à l'invention, cet objectif est atteint grâce à un dispositif d'interface, pour le transfert de produits fluides entre deux conteneurs, comprenant un caisson étanche pourvu de deux ouvertures alignées, une porte, et un tube de transfert formé d'au moins deux tronçons, placés dans ce caisson, et des moyens de manoeuvre aptes à déplacer la porte et le tube de transfert entre une position de repos, dans laquelle la porte obture une première des ouvertures et le tube de transfert est effacé dans le caisson étanche, latéralement par rapport aux ouvertures alignées, et une position de transfert, dans laquelle la porte est effacée dans le caisson, latéralement par rapport aux ouvertures alignées, et le tube de transfert relie les conteneurs de façon étanche coaxialement aux ouvertures, caractérisé par le fait que les deux tronçons du tube de transfert présentent une section intérieure sensiblement uniforme et identique et sont placés bout à bout dans la position de transfert.

De préférence, un premier des tronçons du tube de transfert est monté pivotant autour d'un premier axe orthogonal à l'axe de ce tronçon, et coopère avec la deuxième ouverture et avec le deuxième tronçon par des portées sphériques, avantageusement sans jeu, dans la position de transfert.

Afin d'obtenir des portées sphériques sans jeu, l'un au moins des éléments constitués par le premier tronçon, le deuxième tronçon et le caisson étanche comporte au moins une partie souple.

Selon une première variante, ladite partie souple est une partie annulaire du caisson étanche, reliant une cloison du caisson, dans laquelle est formée la deuxième ouverture, à un tube du caisson, délimitant intérieurement cette deuxième ouverture, et des moyens de rattrapage de jeu, agissant dans le sens de l'axe des ouvertures, sont interposés entre ladite cloison et ledit tube.

Selon une deuxième variante, le premier tronçon coopère avec le deuxième tronçon et avec la deuxième ouverture par des moyens formant cames qui amènent les portées sphériques en contact en déformant la partie souple, lorsque le premier tronçon arrive dans la position de transfert.

Selon une troisième variante, des moyens de gonflage agissent sur la partie souple pour amener les portées sphériques en contact lorsque le premier tronçon occupe la position de transfert.

Dans une première forme de réalisation de l'invention, le premier tronçon est avantageusement monté pivotant sur un premier support mobile placé à l'intérieur du caisson étanche et portant également le deuxième tronçon.

Dans ce cas, le premier support mobile peut former un bras, monté basculant dans le caisson étanche, autour d'un deuxième axe orthogonal à l'axe des ouvertures alignées formées dans le caisson étanche. Les moyens de manoeuvre comprennent alors de moyens pour commander un basculement du bras autour du deuxième axe et des moyens pour commander un pivotement du premier tronçon sur le bras, autour du premier axe. Ces derniers moyens agissent sur le premier tronçon soit au travers de moyens de transmission de mouvement logés dans le bras, soit par un ringard coulissant qui traverse le caisson étanche et agit sur le premier tronçon au travers de moyens de crabotage.

Dans la première forme de réalisation de l'invention, le premier support mobile peut être, en variante, monté coulissant dans le caisson étanche, selon un troisième axe parallèle à l'axe des ouvertures alignées et pivotant autour de ce troisième axe.

Dans une deuxième forme de réalisation de l'invention, le premier tronçon est monté pivotant sur un premier support mobile placé à l'intérieur du caisson étanche, et le deuxième tronçon est porté par un deuxième support mobile également placé à l'intérieur de ce caisson étanche.

Avantageusement, le premier support mobile est alors monté pivotant dans le caisson étanche, autour d'un troisième axe parallèle à l'axe des ouvertures alignées formées dans le caisson.

Dans ce cas, le deuxième support mobile peut être soit monté basculant dans le caisson étanche, autour d'un deuxième axe orthogonal à l'axe des ouvertures alignées, soit monté coulissant dans le caisson étanche selon un quatrième axe parallèle à l'axe des ouvertures alignées et pivotant autour de ce quatrième axe.

Par ailleurs, la porte est montée sur un troisième support mobile placé à l'intérieur du caisson étanche de façon à pouvoir tourner autour de son axe propre.

Dans la première forme de réalisation de l'invention, le troisième support mobile forme alors avantageusement un deuxième bras, monté basculant autour d'un cinquième axe orthogonal à l'axe des ouvertures alignées formées dans le caisson étanche.

Les moyens de manoeuvre comprennent alors des moyens pour commander un basculement du deuxième bras autour du cinquième axe et des moyens pour commander une rotation de la porte autour de son axe propre.

Selon le cas, les moyens pour commander une rotation de la porte peuvent soit agir sur cette dernière au travers de moyens de transmission de mouvement logés dans le deuxième bras, soit comprendre un deuxième ringard coulissant qui traverse le caisson étanche et agit sur la porte au travers de deuxièmes moyens de crabotage.

Dans la deuxième forme de réalisation de l'invention de l'invention, le troisième support mobile est monté pivotant dans le caisson étanche autour d'un sixième axe parallèle à l'axe des ouvertures alignées.

Les moyens de manoeuvre comprennent alors des moyens pour commander un pivotement du troisième support autour du sixième axe et des moyens pour commander une rotation de la porte autour de son axe propre et une translation de la porte selon cet axe.

Selon un autre aspect de l'invention, les moyens de manoeuvre comprennent des actionneurs qui sont tous placés à l'extérieur du caisson étanche. Cet agencement facilite la maintenance des actionneurs et évite qu'ils ne soient endommagés par les produits transférés.

On décrira à présent, à titre d'exemples non limitatifs, différentes formes de réalisation de l'invention, en se référant aux dessins annexés, dans lesquels :
- la figure 1 est une vue en coupe verticale illustrant de façon schématique une forme de réalisation préférentielle d'un dispositif d'interface conforme à l'invention ;
- la figure 2 est une vue en coupe verticale illustrant à plus grande échelle une partie du caisson étanche du dispositif d'interface et les mécanismes associés servant à manoeuvrer le tube de transfert, selon la première forme de réalisation de l'invention ;
- la figure 3 est une vue en coupe comparable à la figure 2 illustrant une variante du mécanisme servant à commander la rotation du premier tronçon du tube de transfert ;
- la figure 4 est une vue comparable à la figure 3 illustrant une variante des moyens permettant d'assurer l'étanchéité du tube de transfert ;
- la figure 5 est une vue en coupe comparable à la figure 2, illustrant les mécanismes servant à manoeuvrer la porte, dans la forme de réalisation de la figure 2 ;
- la figure 6 est une vue comparable à la figure 5, illustrant une variante du mécanisme servant à commander la rotation de la porte ;
- la figure 7 est une vue en coupe comparable à la figure 2 illustrant une deuxième forme de réalisation de l'invention ;
- la figure 8 est une vue en coupe comparable à la figure 7 illustrant une variante de la deuxième forme de réalisation de l'invention ;
- la figure 9 est une vue en coupe comparable à la figure 2 illustrant une variante de la première forme de réalisation de l'invention ; et
- la figure 10 est une vue en coupe comparable à la figure 5 illustrant les mécanismes servant à manoeuvrer la porte, dans la deuxième forme de réalisation de l'invention.

Le dispositif d'interface selon l'invention est conçu pour permettre de transférer à la demande des produits fluides tels que des poudres entre deux conteneurs.

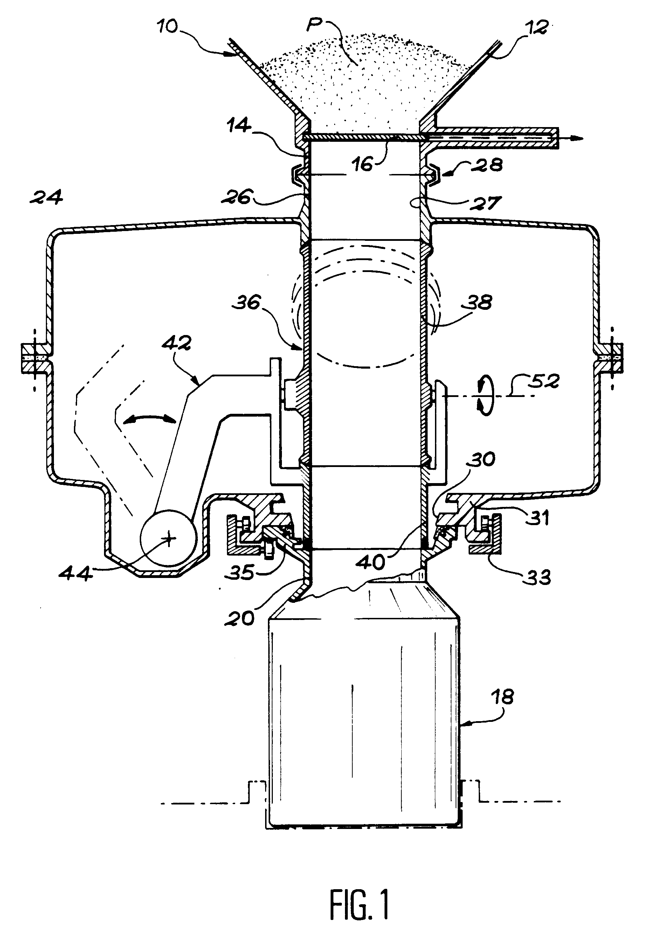

Dans la forme de réalisation préférentielle de l'invention illustrée schématiquement sur la figure 1, le premier conteneur est un conteneur de stockage 10 qui contient le produit fluide P à transférer. Seule la partie basse de ce conteneur 10, matérialisée par une trémie 12, est illustrée sur la figure 1. Dans sa partie basse, la trémie 12 est terminée par un tube vertical 14 délimitant intérieurement un passage de section circulaire uniforme. Ce passage est normalement obturé par une trappe 16 susceptible d'être manoeuvrée à la main ou à l'aide d'un actionneur (non représenté).

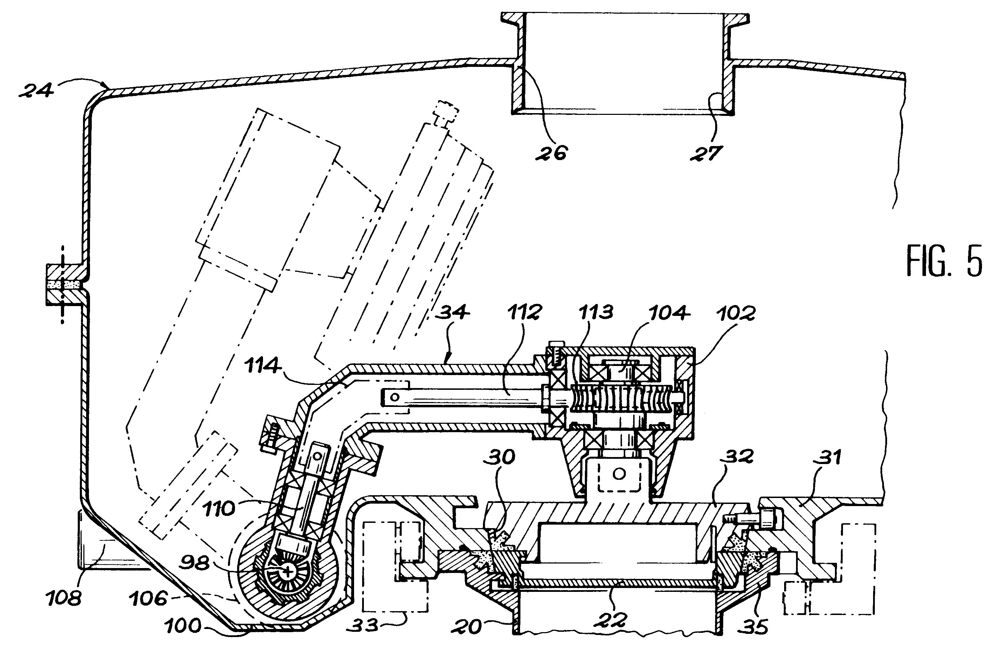

Dans la forme de réalisation préférentielle de la figure 1, le deuxième conteneur est un conteneur de transfert mobile 18 permettant de transférer un certain volume du produit fluide P sur un autre site. Ce conteneur 18 comporte un col 20 définissant intérieurement un passage de section circulaire uniforme, dont le diamètre est avantageusement le même que celui du passage délimité intérieurement par la partie tubulaire 14. Une porte 22 (figure 5) coopère par un système à baïonnette avec l'extrémité du col 20, pour obturer de façon étanche le conteneur 18.

Le dispositif d'interface selon l'invention est prévu pour être associé au conteneur de stockage 10, de façon à former un sas entre ce conteneur et le conteneur de transfert mobile 18.

A cet effet, le dispositif d'interface selon l'invention comprend un caisson étanche 24 dont la paroi supérieure est traversée par un tube 26 prévu pour être raccordé de façon étanche sur la partie tubulaire du conteneur 10 par des moyens de fixation étanche illustrés schématiquement en 28 sur la figure 1. Le tube 26 délimite intérieurement une ouverture 27 de section circulaire uniforme, dont le diamètre est égal au diamètre intérieur du tube vertical 14. Lorsque le tube 26 est raccordé sur le tube 14 par les moyens de fixation étanche 28, leurs axes sont alignés, de telle sorte qu'il n'existe pratiquement pas de discontinuité pour le passage du produit fluide P.

Sur sa paroi inférieure faisant face au tube 26, le caisson étanche 24 comporte une autre ouverture circulaire 30, axialement alignée avec l'ouverture circulaire 27 définie par le tube 26. Cette deuxième ouverture circulaire 30 est normalement obturée par une porte 32 (figure 5) qui coopère par un système à baïonnette avec l'ouverture circulaire 30, pour l'obturer normalement de façon étanche. Des moyens de manoeuvre qui seront décrits ultérieurement en se référant à la figure 5 permettent de commander une rotation de la porte 32 autour de son axe propre, afin d'assurer son ouverture et sa fermeture, ainsi qu'un basculement d'un bras 34 (figure 5) portant la porte 32, à l'intérieur du caisson étanche 24, entre une position de repos dans laquelle la porte obture trouve dans l'ouverture 30 et une position de transfert dans laquelle la porte est escamotée latéralement par rapport à cette ouverture. Sur la figure 1, la porte 32 se trouve dans cette dernière position, ce qui explique qu'elle n'y est pas représentée.

L'ouverture 30 normalement fermée par la porte 32 est délimitée par une bride 31 appartenant à la paroi du caisson étanche 24. A l'extérieur de ce dernier, la bride 31 supporte de façon rotative une couronne 33. Cette couronne 33 coopère par un système à baïonnette avec une bride 35 terminant le col 20 du conteneur de transfert mobile 18, de façon à permettre le raccordement étanche de ce dernier sur le caisson étanche 24.

Les brides 31 et 35 ainsi que les portes 32 et 22, respectivement associées au caisson étanche 24 et au conteneur 18, forment un système de transfert étanche à double porte. La porte 22 du conteneur 18 est donc associée à la porte 32 du caisson 24 lorsque cette dernière est amenée en position de transfert.

Comme l'illustre très schématiquement la figure 1, le dispositif d'interface selon l'invention comprend de plus un tube de transfert 36, de section circulaire, dont le diamètre intérieur est sensiblement uniforme et égal au diamètre intérieur des tubes 14 et 26 et du col 20.

Le tube de transfert 36 est formé de deux tronçons 38 et 40 qui sont placés bout à bout dans le prolongement du tube 26, dans la position de transfert illustrée sur la figure 1, dans laquelle le tube de transfert 36 relie de façon étanche les enceintes 10 et 18, coaxialement aux ouvertures 27 et 30. Dans cette position de transfert, la porte 32 est effacée dans le caisson étanche 24, comme indiqué précédemment.

Le tube de transfert 36 peut également occuper une position de repos, dans laquelle il est effacé à l'intérieur du caisson étanche 24. Dans cette position de repos, la porte 32 obture l'ouverture 30, comme l'illustre la figure 5.

Le déplacement de la porte 32 et du tube de transfert 36 entre la position de repos et la position de transfert est assuré par des moyens de manoeuvre qui peuvent prendre différentes formes.

Dans la forme de réalisation illustrée sur les figures 1 à 4, les deux tronçons 38 et 40 du tube de transfert 36 sont montés sur un même support mobile formé par un bras 42. Ce bras 42 est monté basculant dans le caisson étanche 24, autour d'un axe 44 orthogonal à l'axe des ouvertures alignées 27 et 30.

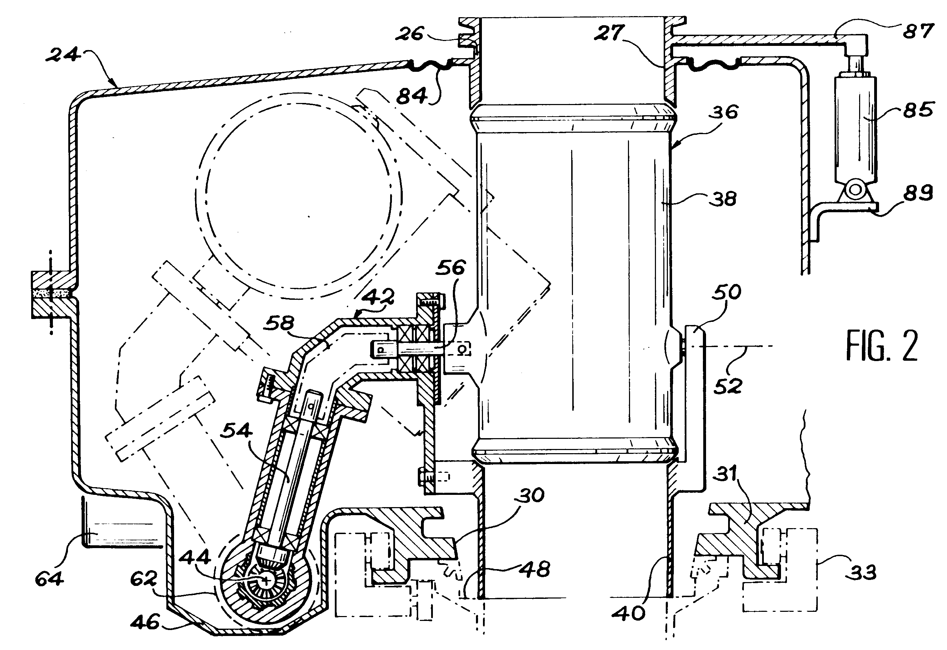

Comme l'illustre plus précisément la figure 2, l'axe 44 traverse un renflement 46 formé dans la paroi inférieure du caisson étanche 24 comportant l'ouverture 30. Le bras 42 est articulé sur l'axe 44 par l'une de ses extrémités et présente une forme coudée. Le tronçon 40 du tube de transfert 36 est fixé à l'extrémité opposée du bras 42, de telle sorte que l'axe de ce tronçon 40 soit orthogonal à l'axe 44 et vienne se placer dans l'alignement de l'axe commun aux ouvertures 27 et 30 dans la position de transfert précitée. Dans cette position, illustrée en trait plein sur la figure 2, une face d'extrémité inférieure du tronçon 40, vient en appui contre un épaulement 48 formé sur la bride 35 du conteneur 18, alors accosté sur le caisson étanche 24. L'étanchéité est avantageusement assurée par un joint monté sur la face d'extrémité précitée du tronçon 40 du tube de transfert 36, ou plus simplement par un contact métal-métal.

L'extrémité du bras 42 à laquelle est fixé le tronçon 40 du tube de transfert comporte une chape 50 dans laquelle est monté pivotant le tronçon 38 du tube de transfert. Cette chape 50 définit un axe de pivotement 52 perpendiculaire à l'axe du tronçon 40 et orthogonal à l'axe de basculement 44, dans la forme de réalisation illustrée sur la figure 2. Dans la position de transfert dans laquelle l'extrémité du tronçon 40 est en appui sur l'épaulement 48, l'axe 52 est perpendiculaire à l'axe commun aux ouvertures 27 et 30. De plus, la longueur du tronçon 38 du tube de transfert 36 est sensiblement égale à la distance qui sépare alors les extrémités en vis-à-vis du tube 27 et du tronçon 40.

Dans la position de transfert, le tronçon 38 du tube de transfert est disposé coaxialement au tronçon 40 ainsi qu'à l'ouverture 27 et au col 20. Etant donné que les diamètres intérieurs de ces différents élément sont sensiblement uniformes et identiques, il n'existe alors pas de zone de rétention entre les conteneurs 10 et 18. Le transfert du produit fluide P peut donc se faire sans risque de voir une partie de ce produit bloqué dans le dispositif d'interface. Cette observation est valable quelle que soit l'orientation de l'axe commun aux ouvertures 27 et 30 et aux tronçons 38 et 40 du tube de transfert. Cela permet notamment d'effectuer aussi bien un transfert par gravité, dans le cas où cet axe est vertical, qu'un transfert à l'aide d'un système de poussée placé dans le conteneur 10, lorsque l'axe précité est orienté différemment.

Pour permettre le basculement du bras 42 vers sa position de repos, illustrée en traits mixtes sur la figure 2, un pivotement du tronçon 38 du tube de transfert sensiblement à 90° autour de son axe de pivotement 52 doit être effectué.

Dans la forme de réalisation illustrée sur la figure 2, ce pivotement est commandé au travers de moyens de transmission de mouvement logés à l'intérieur du bras 42. Ces moyens de transmission de mouvement sont constitués par des mécanismes classiques comprenant notamment des arbres 54 et 56 coopérant entre eux par une transmission flexible 58 ou du type à cardans. Un actionneur 62, placé à l'extérieur du caisson étanche 24, commande le pivotement du tronçon 38 par l'intermédiaire des moyens de transmission de mouvement précités.

Le mouvement de basculement du bras 42 autour de l'axe de basculement 44 est également commandé par des moyens de manoeuvre constitués par un actionneur 64 placé à l'extérieur du caisson étanche 24.

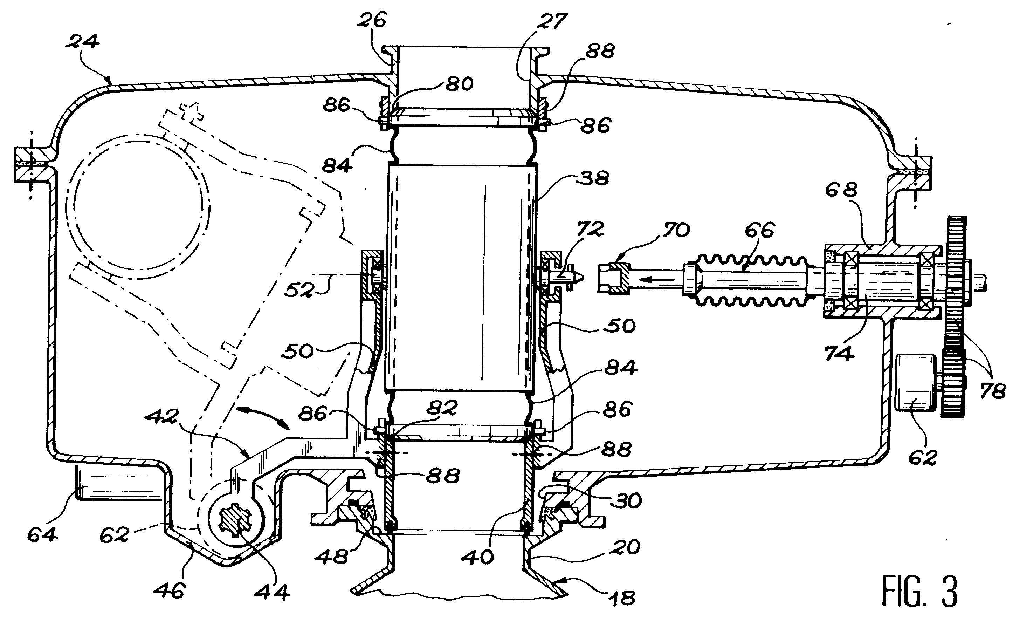

La figure 3 représente une variante de la figure 2, qui ne diffère de cette dernière que par le mécanisme permettant de commander le pivotement du tronçon 38 du tube de transfert 36 autour de son axe de pivotement 52.

Dans cette variante, les moyens de transmission de mouvement placés dans le bras 42 sont remplacés par un ringard coulissant 66, monté tournant et coulissant dans un tube 68 traversant la paroi du caisson étanche 24 selon l'axe 52. L'extrémité du ringard coulissant 66 placée à l'intérieur du caisson étanche 24 est apte à coopérer, par des moyens de crabotage 70, avec l'extrémité d'un tourillon 72 disposé selon l'axe 52 et solidaire du tronçon 38 du tube de transfert.

Un manchon 74 est supporté de façon rotative par le tube 68 et traversé par le ringard coulissant 66, de façon à être lié en rotation à ce dernier, par exemple par un système de clavettes.

Les moyens de manoeuvre comprennent dans ce cas un actionneur 62, placé à l'extérieur du caisson étanche 24 de façon à pouvoir entraîner en rotation le manchon 74 autour de son axe par l'intermédiaire d'un jeu d'engrenages 78. Un autre actionneur (non représenté) permet de commander le déplacement axial du ringard coulissant 66 entre sa position de crabotage et sa position de décrabotage, par exemple par l'intermédiaire d'un mécanisme du type vis-écrou. Ce dernier actionneur est également placé à l'extérieur du caisson 24.

Dans les variantes de réalisation illustrées sur les figures 2 et 3, l'amenée du tronçon 38 du tube de transfert 36 dans l'alignement des ouvertures 37 et 30 s'accompagne de la venue en appui sans jeu de portées sphériques 80, 82 formées à chacune des extrémités de ce tronçon 38 contre des portées sphériques complémentaires formées sur l'extrémité adjacente du tube 26 et sur l'extrémité adjacente du tronçon 40.

Dans la variante de réalisation de la figure 2, le caisson étanche 24 comporte une partie annulaire 84, souple ou déformable, qui relie le tube 26 à la cloison du caisson supportant ce tube. De plus, un accouplement souple (non représenté) est interposé, à l'intérieur du caisson étanche 24, entre l'actionneur 64 et le bras 42. Un système souple tel qu'un joint torique (non représenté) est également inséré entre l'arbre 56 disposé selon l'axe 52 et le bras 42.

Dans cette variante de la figure 2, il existe normalement un léger jeu (par exemple 0,5 mm) entre le tronçon 38 et le tube 26 et entre les tronçons 38 et 40. De plus, le tronçon 40 est avantageusement en appui direct métal sur métal sur l'épaulement 48 de la bride 35 du conteneur 18.

Le rattrapage des jeux est assuré par des moyens de rattrapage de jeux tels qu'au moins deux vérins 85 dont les axes sont orientés parallèlement à l'axe commun aux ouvertures 27 et 30. Ces vérins prennent appui, d'une part, sur le tube 26 par des bras rigides 87 et, d'autre part, sur la cloison du caisson étanche 24 par des consoles 89. L'actionnement des vérins 85, a pour effet de rattraper les jeux entre le tube 26, le tronçon 38, le tronçon 40 et la bride 35, grâce aux déformations de la partie annulaire souple 84, de l'accouplement souple actionneur 64-bras 42, et du joint torique entourant l'arbre 56.

Les vérins 85, placés à l'extérieur du caisson 24, sont avantageusement placés dans un plan orthogonal au plan de la figure 2. L'un d'entre eux a été ramené dans ce dernier plan, pour faciliter la compréhension.

Dans la variante de réalisation de la figure 3, le tronçon 38 du tube de transfert 36 comporte, à proximité de chacune de ses extrémités, une partie souple ou déformable 84 qui autorise une légère variation de longueur de ce tronçon 38 sans entraîner de variation notable de son diamètre intérieur. Les parties souples 84 peuvent notamment être formées par des parties tubulaires de moindre épaisseur présentant une section en forme d'onde très aplatie. Au repos, les parties souples 84 assurent l'existence d'un jeu fonctionnel facilitant le pivotement du tronçon 38 autour de l'axe 52.

Les parties terminales du tronçon 38 prévues pour venir en contact respectivement avec le tube 26 et avec le tronçon 40 par les portées sphériques 80 et 82 comportent sur leur périphérie des doigts 86 orientés radialement vers l'extérieur, parallèlement à l'axe de pivotement 52 du tronçon 38. Lorsque le tronçon 38 pivote de sa position escamotée permettant le basculement du bras 42 dans sa position d'alignement avec le tube 27 et le tronçon 40, les doigts 86 viennent en appui sur des moyens formant came. Dans cette variante, les moyens formant came comprennent des rampes de guidage formées sur des crochets 88 fixés respectivement sur les extrémités adjacentes du tube 27 et du tronçon 40.

La coopération des doigts 86 avec les rampes formées sur les crochets 88 a pour effet d'allonger légèrement le tronçon 38 du tube de transfert en déformant les parties souples 84. Un contact sans jeu est ainsi assuré au niveau des portées sphériques 80 et 82 lorsque le tronçon 38 arrive dans l'alignement du tube 27 et du tronçon 40.

Il est à noter qu'en variante, les parties souples 84 pourraient être remplacées par une partie souple unique. De plus, la ou les parties souples peuvent être placées en dehors du tronçon 38 et notamment sur le tronçon 40 ainsi que sur le caisson étanche 24, notamment sur le tube 26 ou sur la paroi qui le supporte.

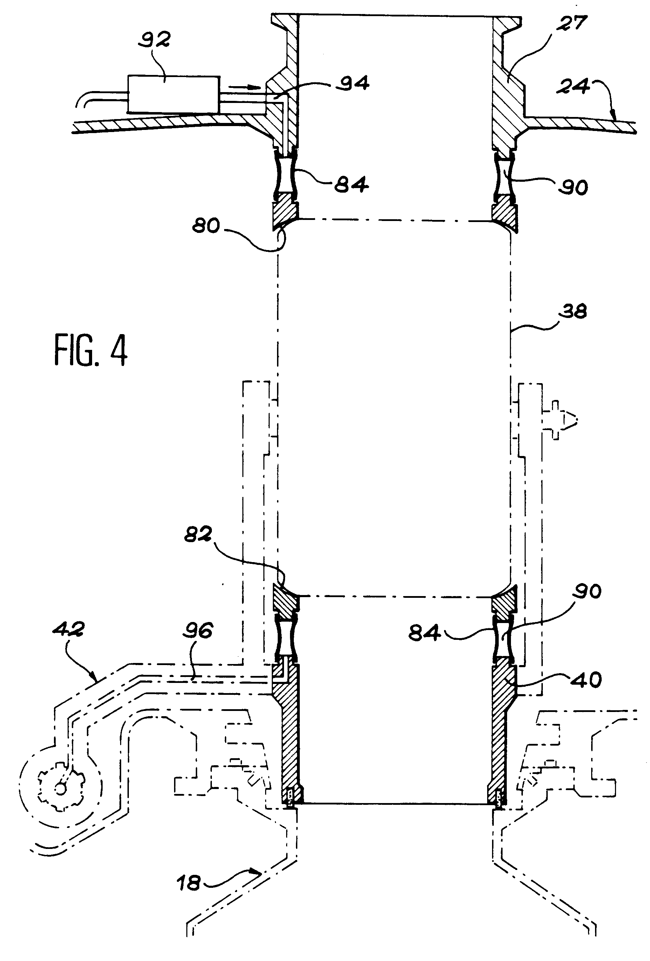

Dans une autre variante de la première forme de réalisation de l'invention, illustrée sur la figure 4, la suppression du jeu au niveau des portées sphériques 80 et 82 est toujours obtenue par une déformation de parties souples 84. Cependant, au lieu d'être assurée par les moyens formant came 86 et 88, cette déformation est commandée par des moyens de gonflage 92 agissant sur les parties souples 84.

Plus précisément, dans le cas de la figure 4, les parties souples 84 sont formées sur le tube 27 et sur le tronçon 40, à proximité des portées sphériques 80 et 82. Chacune des parties souples 84 est alors entourée d'une chambre annulaire 90 reliée aux moyens de gonflage 92, ces derniers étant placés à l'extérieur du caisson étanche 24. Les moyens de gonflage 92 communiquent avec la chambre annulaire 90 formée dans le tube 27 par un premier passage 94 cheminant dans ce tube et avec la chambre annulaire 90 formée dans le tronçon 40 du tube de transfert par un deuxième passage 96 cheminant à l'intérieur du bras basculant 42.

Comme dans le cas où le contact sans jeu des portées sphériques 80 et 82 est assuré par des moyens formant came, les parties souples 84 peuvent être prévues indifféremment sur le tronçon 38, sur le caisson étanche 24 (c'est-à-dire notamment sur le tube 27 ou sur la paroi qui le supporte) et/ou sur le tronçon 40.

Dans la première forme de réalisation de l'invention, les moyens de manoeuvre permettant de déplacer la porte 32 de sa position de repos dans laquelle elle obture l'ouverture 30 dans sa position de transfert dans laquelle elle est effacée dans le caisson 24, agissent de préférence sur la porte 32 par le bras basculant 34, d'une manière qui va à présent être décrite en se référant à la figure 5.

Le bras 34 est monté basculant à l'intérieur du caisson étanche 24 autour d'un axe 98 orthogonal à l'axe commun aux ouvertures 27 et 30. Cet axe 98 est situé sensiblement dans le même plan perpendiculaire à l'axe commun aux ouvertures 27 et 30 que l'axe de basculement 44 du bras 42. Il traverse une protubérance 100 de la paroi du caisson 24 comportant l'ouverture 30. Cette protubérance 100 est située en un emplacement décalé angulairement par rapport à la protubérance 46 que traverse l'axe 44, autour de l'axe commun aux ouvertures 27 et 30. Cet agencement permet d'éviter toute interférence entre les bras 42 et 34 et les structures qu'ils supportent, lors de leurs mouvements de basculement respectifs.

Le bras 34 présente une forme coudée et il est articulé sur l'axe 98 à l'une de ses extrémités. Son extrémité opposée porte un boîtier 102 dans lequel est supporté de façon rotative un tourillon 104 solidaire de la porte 32. Le bras 34 est configuré de telle manière que l'axe commun à la porte 32 et au tourillon 104 soit confondu avec l'axe commun aux ouvertures 27 et 30 lorsque la porte 32 est reçue dans l'ouverture 30.

Un premier actionneur 106 situé à l'extérieur du caisson étanche 24 agit sur le bras 34 de façon à commander son basculement autour de l'axe 98 entre la position de repos et la position de transfert définies précédemment.

Du fait que la porte 32 coopère avec l'ouverture 30 par un système à baïonnette, l'ouverture et la fermeture de la porte sont assurées par une mise en rotation de celle-ci dans l'un ou l'autre sens. Un autre système à baïonnette est prévu entre la porte 32 du caisson étanche 24 et la porte 22 du conteneur de transfert 18. La rotation de la porte 32 dans le sens de son ouverture a donc aussi pour effet de la solidariser de la porte 22 du conteneur, alors que la rotation de la porte 32 dans le sens de sa fermeture a aussi pour effet de la désolidariser de la porte 22 du conteneur.

Dans la forme de réalisation illustrée sur la figure 5, la manoeuvre de la porte 32 est assurée par un actionneur 108 placé à l'extérieur du caisson étanche 24, au travers de moyens de transmission de mouvement logés dans le bras 34. A l'intérieur du bras 34, ces moyens comprennent par exemple des arbres rotatifs 110 et 112 dont les extrémités coopèrent par une transmission souple 114. L'arbre qui pénètre dans le boîtier 102 comporte une vis sans fin (non représentée) qui coopère avec une roue dentée 113 portée par le tourillon 104.

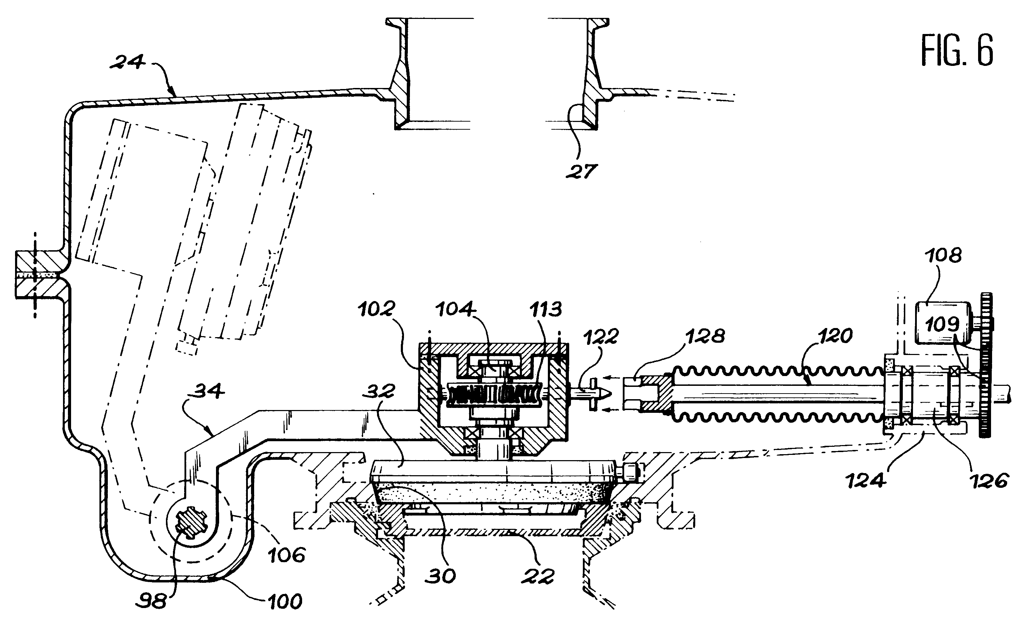

Une variante de réalisation du mécanisme permettant de commander la rotation de la porte 32, qui va à présent être décrite en se référant à la figure 6, est à rapprocher de la variante décrite précédemment en se référant à la figure 3.

En effet, au lieu de comprendre des moyens de transmission de mouvement logés dans le bras 34, ce mécanisme comprend alors un ringard coulissant 120 qui traverse la paroi du caisson étanche 24 selon une direction orthogonale à l'axe commun aux ouvertures 27 et 30. Plus précisément, le ringard coulissant 120 est aligné avec un arbre 122, supporté de façon rotative par le boîtier 102, lorsque le bras 34 occupe sa position de repos correspondant à la fermeture de la porte 32. L'arbre 122 est monté tournant dans le boîtier 102 selon une direction orthogonale à l'axe du tourillon 104 et il comporte une vis sans fin (non représentée) engrenée sur une roue dentée 113 solidaire du tourillon 104. Une rotation de l'arbre 122 a ainsi pour effet une rotation de la porte 32 autour de son axe.

Le ringard coulissant 120 est monté dans la cloison du caisson étanche 24 par un tube 124 appartenant à cette dernière. Plus précisément, le tube 124 supporte de façon tournante un manchon 126 que traverse de façon coulissante le ringard 120. Un système de clavettes permet de lier en rotation le manchon 126 et le ringard 120.

A son extrémité située à l'intérieur du caisson étanche 24, le ringard coulissant 120 comporte des moyens de crabotage 128 aptes à venir en prise sur l'extrémité de l'arbre 122 lorsque le ringard est déplacé vers l'intérieur du caisson étanche.

Dans ce cas, la manoeuvre du bouchon 32 est commandée par un actionneur 108 placé à l'extérieur du caisson étanche 24 et coopérant avec le manchon 126 par un jeu de pignons 109 de façon à en assurer l'entraînement en rotation.

Un deuxième actionneur (non représenté) permet de déplacer le ringard coulissant 120 entre sa position active, dans laquelle le ringard est solidarisé en rotation de l'arbre 122 par les moyens de crabotage 128 et sa position effacée, par l'intermédiaire d'un mécanisme tel qu'un système pignon-vis sans fin.

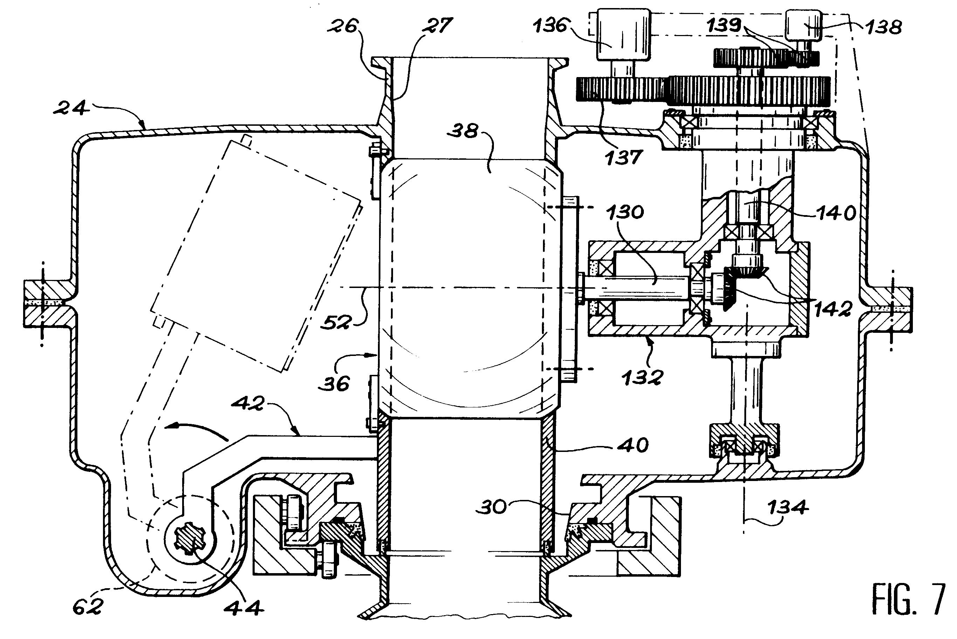

On décrira à présent en se référant à la figure 7 une deuxième forme de réalisation de l'invention qui diffère de la première par les moyens permettant de commander le déplacement du tronçon 38 du tube de transfert 36 de sa position de repos dans laquelle il est effacé dans le caisson étanche 24 dans sa position de transfert dans laquelle il est aligné avec les ouvertures 27 et 30 ainsi qu'avec le tronçon 40.

Dans cette deuxième forme de réalisation de l'invention, le tronçon 40 du tube de transfert 36 est monté comme précédemment à l'extrémité d'un bras basculant 42 dont le pivotement peut être commandé depuis l'extérieur du caisson étanche 24 par un actionneur 62.

Cependant, au lieu d'être également supporté par le bras basculant 42, le tronçon 38 du tube de transfert 36 est totalement indépendant du bras 42. Ainsi, l'axe de pivotement 52 du tronçon 38 est matérialisé dans ce cas par un arbre 130 monté pivotant dans un support mobile 132 placé dans le caisson étanche 24 en un emplacement décalé angulairement autour de l'axe commun aux ouvertures 27 et 30 par rapport au bras basculant 42. Plus précisément, ce support mobile 132 est monté pivotant dans le caisson étanche 24 autour d'un axe de pivotement 134 parallèle à l'axe des ouvertures alignées 27 et 30. La commande du pivotement du support 132 autour de l'axe 134, permettant d'effacer le tronçon 38 à l'intérieur du caisson étanche 24, est assurée par un actionneur 136 placé à l'extérieur du caisson 24. Cet actionneur 136 agit sur le support 132 par un jeu de pignons 137. A cet effet, le support 132 travers l'une des parois du caisson étanche 24.

La commande du pivotement du tronçon 38 autour de son axe 52 est assurée par un autre actionneur 138 placé à l'extérieur du caisson étanche 24. Cet actionneur agit sur l'arbre 130 par des moyens de transmission de mouvement logés en partie dans le support 132. Ces moyens de transmission de mouvement comprennent par exemple un jeu de pignons 139, un arbre 140 et des pignons de renvoi d'angle 142.

Bien qu'ils soient montés sur des supports mobiles différents, les tronçons 38 et 40 coopèrent entre eux ainsi qu'avec le tube 26 par des portées sphériques, comme dans la première forme de réalisation, lorsqu'ils sont alignés. Les contacts de ces portées sphériques sont alors assurés de la même manière que cela a été décrit en se référant aux figures 2 et 4.

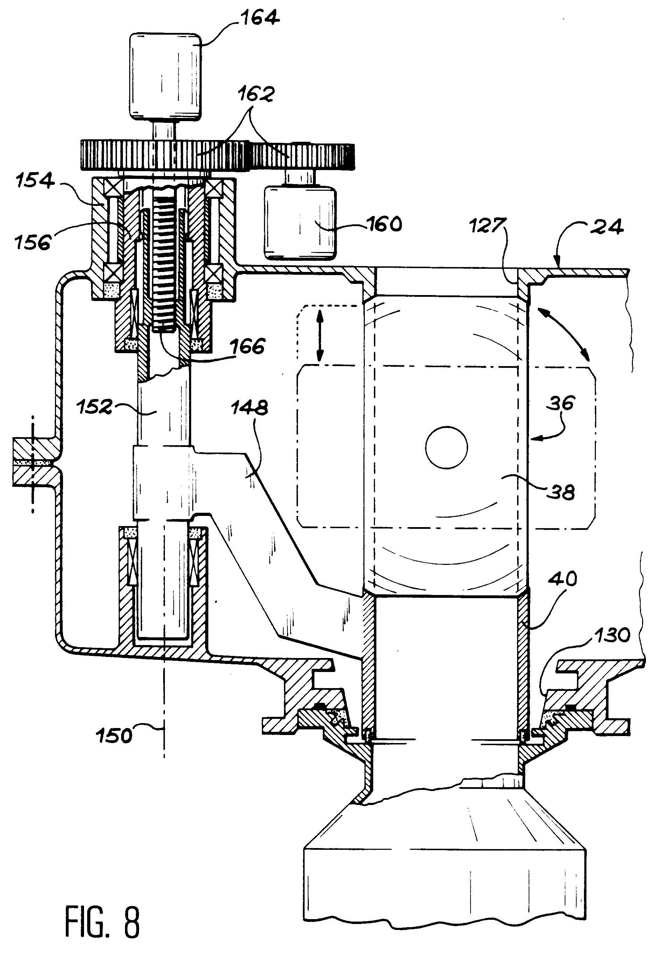

La figure 8 illustre une variante de la deuxième forme de réalisation de l'invention dans laquelle les tronçons 38 et 40 du tube de transfert 36 sont également montés sur des supports mobiles différents.

Plus précisément, le montage du support mobile 38 est identique à celui qui vient d'être décrit en référence à la figure 7, de sorte qu'il ne sera pas décrit à nouveau. En revanche, au lieu d'être monté sur un bras basculant, le tronçon 40 du tube de transfert est monté sur un support 148 en forme de bras, logé dans le caisson étanche 24 de façon à pouvoir pivoter autour d'un axe 150 parallèle à l'axe commun aux ouvertures 127 et 130, et coulisser selon cet axe.

A cet effet, l'extrémité du support 148 opposée au tronçon 40 a la forme d'un tourillon 152 qui traverse un tube 154 lié à la cloison du caisson étanche 24. Plus précisément, le tube 154 supporte de façon rotative un manchon 156 dans lequel peut coulisser le tourillon 152. Un système de clavettes lie toutefois en rotation le tourillon 152 au manchon 156.

Un actionneur 160, placé à l'extérieur du caisson étanche 24, agit sur le manchon 156 par un jeu de pignons 162, de façon à commander le pivotement du support 148 en forme de bras autour de l'axe 150.

Un autre actionneur 162, également placé à l'extérieur du caisson étanche 24, entraîne en rotation une tige filetée 166 qui pénètre axialement dans une partie d'extrémité évidée du tourillon 152, logée dans le manchon 156. La tige filetée 166 coopère avec un taraudage formé à l'intérieur du tourillon 152, de telle sorte que l'actionneur 164 commande la translation du support 148 selon l'axe 150.

Dans cette forme de réalisation de l'invention, l'effacement du tronçon 40 du tube de liaison 36 intervient comme sur la figure 7 après l'effacement du tronçon 36. Toutefois, le mouvement de basculement du bras portant le tronçon 40 est remplacé par un mouvement de coulissement du support 148 en forme de bras suivi d'un mouvement de pivotement de ce support autour de l'axe 150. L'amplitude du mouvement de coulissement est déterminée afin que le tronçon 40 puisse pivoter autour de l'axe 150 à l'intérieur du caisson 24.

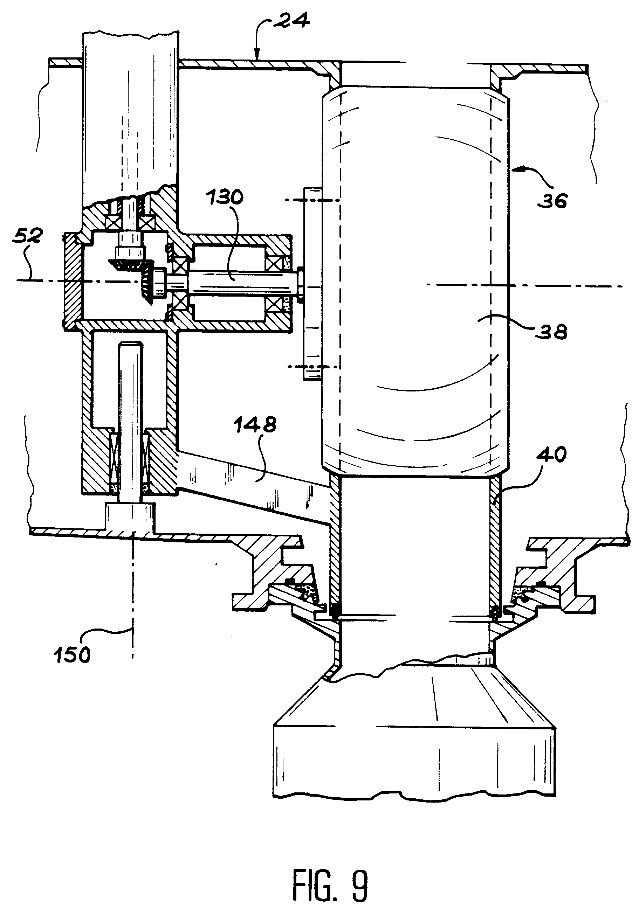

On a illustré sur la figure 9 une variante de la première forme de réalisation de l'invention dérivée de la forme de réalisation de la figure 8, dans laquelle tous les mécanismes permettant de commander les déplacements en translation et en rotation du tronçon 40 sont repris à l'identique de la figure 8 ou remplacés par des moyens techniquement équivalents. Cette variante se distingue essentiellement de la figure 8 par le fait qu'au lieu d'être monté sur un support différent, le tronçon 38 est monté sur le support 148 qui porte le tronçon 40. Dans ce cas, l'arbre 130 qui matérialise l'axe de pivotement 52 du tronçon 38 est monté pivotant dans le support 148, de telle sorte que l'actionneur (non représenté) servant à commander le pivotement du support 148 autour de l'axe 150 remplit également la fonction de l'actionneur 136 sur la figure 7. Un autre actionneur (non représenté) comparable à l'actionneur 138 sur la figure 7 commande alors le pivotement du tronçon 38 autour de son axe de pivotement 52, par l'intermédiaire de moyens de transmission de mouvement analogues à ceux qui ont été décrits sur la figure 7.

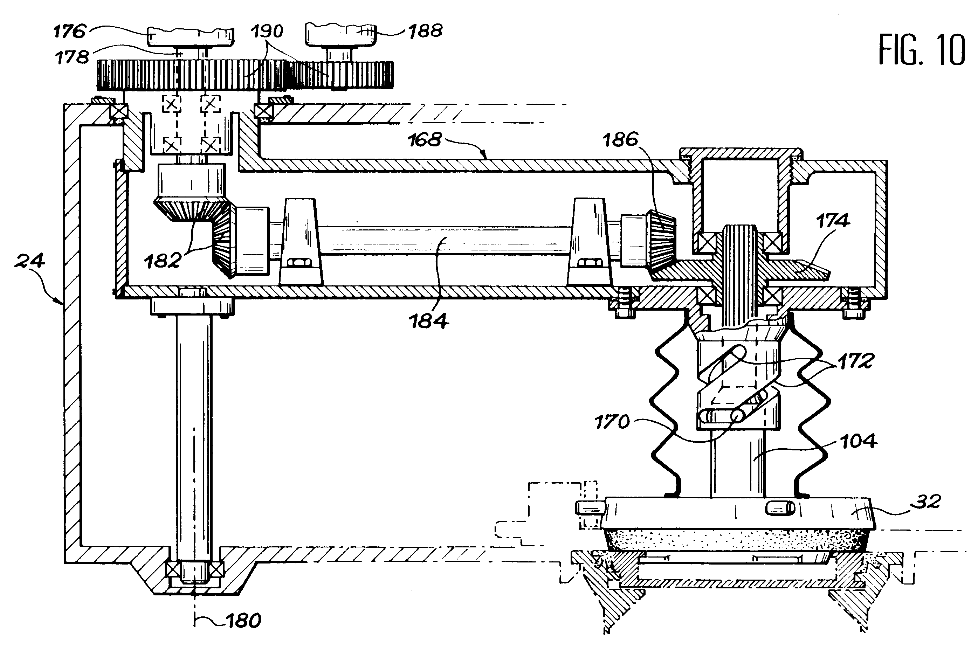

Dans la forme de réalisation décrite précédemment en se référant à la figure 8 ainsi que dans la variante de la figure 9, les manoeuvres de rotation et d'effacement de la porte 32 sont assurées par des mécanismes qui vont à présent être décrits en se référant à la figure 10.

Dans ce cas, au lieu d'être montée sur un bras basculant comme dans la forme de réalisation décrite en se référant aux figures 5 et 6,, la porte 32 est montée sur un support pivotant 168 monté à l'intérieur du caisson étanche 24. Ce support 168 a la forme d'un bras creux dont une extrémité est montée pivotante sur la paroi du caisson 24 et dont l'extrémité opposée supporte la porte 32. Plus précisément, la porte 32 est solidaire d'un tourillon 104 qui porte des doigts 170 orientés radialement vers l'extérieur. Ces doigts 170 sont reçus dans des rainures 172 formées dans une partie tubulaire du support 168, que traverse le tourillon 104. Cet agencement a pour effet d'accompagner une rotation de la porte 32 d'un mouvement de translation contrôlé de cette porte selon son axe.

A l'intérieur du support 168, l'extrémité du tourillon 104 est reçue de façon coulissante dans un pignon 174. Un système de clavettes solidarise en rotation le pignon 174 du tourillon 104.

Cet agencement permet à un actionneur 176 placé à l'extérieur du caisson étanche 24 de commander simultanément les mouvements de rotation de la porte 32 nécessaires à son ouverture et à sa fermeture et les mouvements de translation de cette porte nécessaires à son effacement. L'actionneur 176 agit sur le pignon 174 par l'intermédiaire de moyens de transmission de mouvement logés dans le support 168. Dans l'exemple de réalisation représenté, ces moyens de transmission de mouvement comprennent un arbre 178 disposé selon l'axe de pivotement 180 du support 168, des pignons de renvoi d'angle 182, un deuxième arbre 184 et un pignon 186 engrené sur le pignon 174 à l'intérieur du support 168.

Il est à noter que la forme donnée aux rainures 172 permet, lors d'une mise en oeuvre de l'actionneur 176, de réaliser successivement la rotation de la porte 32 puis son effacement vers l'intérieur du caisson 24.

Le pivotement du support 168 autour de son axe de pivotement 180 peut ensuite être commandé par un second actionneur 188, également placé à l'extérieur du caisson étanche 24 et qui agit directement sur le support 168 par un jeu de pignons 190.

Bien entendu, les différentes formes de réalisation décrites ainsi que leurs variantes peuvent être combinées sans sortir du cadre de l'invention.

## Revendications

1. Dispositif d'interface, pour le transfert de produits fluides entre deux conteneurs (10,18), comprenant un caisson étanche (24) pourvu de deux ouvertures alignées (27,30), une porte (32) et un tube de transfert (36) formé d'au moins deux tronçons (38,40), placés dans ce caisson, et des moyens de manoeuvre (62,54,106,108,136,138,162,164,176,188) aptes à déplacer la porte et le tube de transfert entre une position de repos, dans laquelle la porte (32) obture une première(30) des ouvertures et le tube de transfert (36) est effacé dans le caisson étanche, latéralement par rapport aux ouvertures alignées, et une position de transfert, dans laquelle la porte (32) est effacée dans le caisson (24), latéralement par rapport aux ouvertures alignées (27,30), et le tube de transfert (36) relie les conteneurs (10,18) de façon étanche coaxialement aux ouvertures (27,30), caractérisé par le fait que les deux tronçons (38,40) du tube de transfert présentent une section intérieure sensiblement uniforme et identique et sont placés bout à bout dans la position de transfert.

2. Dispositif selon la revendication 1, caractérisé par le fait qu'un premier (38) des tronçons du tube de transfert (36) est monté pivotant autour d'un premier axe (52) orthogonal à l'axe de ce tronçon, et coopère avec la deuxième ouverture (27) et avec le deuxième tronçon (40) par des portées sphériques (80,82) dans la position de transfert.

3. Dispositif selon la revendication 2, caractérisé par le fait que les portées sphériques (80,82) sont des portées sans jeu.

4. Dispositif selon la revendication 2, caractérisé par le fait que le caisson étanche (24) comporte une partie souple annulaire (84) reliant une cloison du caisson, dans laquelle est formée la deuxième ouverture (27), à un tube (26) du caisson, délimitant intérieurement cette deuxième ouverture, des moyens (85) de rattrapage de jeu, agissant dans le sens de l'axe des ouvertures (27,30), sont interposés entre ladite cloison et ledit tube.

5. Dispositif selon la revendication 2, caractérisé par le fait que l'un au moins des éléments constitués par le premier tronçon (38), le deuxième tronçon (40) et le caisson étanche (24) comporte au moins une partie souple (84), le premier tronçon (38) coopérant avec le deuxième tronçon (40) et avec la deuxième ouverture (27) par des moyens formant came (86,88) qui amènent les portées sphériques en contact en déformant la partie souple, lorsque le premier tronçon (38) arrive dans la position de transfert.

6. Dispositif selon l'une quelconque des revendications 2 et 3, caractérisé par le fait que l'un au moins des éléments constitués par le premier tronçon (38), le deuxième tronçon (40) et le caisson étanche (24) comporte au moins une partie souple (84), des moyens de gonflage (92) agissant sur ladite partie souple pour amener les portées sphériques (80,82) en contact lorsque le premier tronçon (38) occupe la position de transfert.

7. Dispositif selon l'une quelconque des revendications 2 à 6, caractérisé par le fait que le premier tronçon (38) est monté pivotant sur un premier support mobile (42) placé à l'intérieur du caisson étanche (24) et portant également le deuxième tronçon (40).

8. Dispositif selon la revendication 7, caractérisé par le fait que le premier support mobile forme un bras (42), monté basculant dans le caisson étanche (24), autour d'un deuxième axe (44) orthogonal à l'axe desdites ouvertures alignées (27,30).

9. Dispositif selon la revendication 8, caractérisé par le fait que les moyens de manoeuvre comprennent des moyens pour commander un basculement du bras (42) autour du deuxième axe et des moyens (64) pour commander un pivotement du premier tronçon (38) sur le bras (42), autour du premier axe (52).

10. Dispositif selon la revendication 9, caractérisé par le fait que les moyens (64) pour commander un pivotement du premier tronçon (38) sur le bras (42) agissent sur ce premier tronçon au travers de moyens de transmission de mouvement (54) logés dans le bras.

11. Dispositif selon la revendication 9, caractérisé par le fait que les moyens pour commander un pivotement du premier tronçon (38) sur le bras (42) comprennent un ringard coulissant (66) qui traverse le caisson étanche (24) et agit sur le premier tronçon au travers de moyens de crabotage (70).

12. Dispositif selon la revendication 7, caractérisé par le fait que le premier support mobile (132) est monté coulissant dans le caisson étanche (24), selon un troisième axe (134) parallèle à l'axe des ouvertures alignées (27,30), et pivotant autour de ce troisième axe.

13. Dispositif selon l'une quelconque des revendications 2 à 6, caractérisé par le fait que le premier tronçon (38) est monté pivotant sur un premier support mobile (132) placé à l'intérieur du caisson étanche (24), le deuxième tronçon (40) étant porté par un deuxième support mobile (42) placé à l'intérieur du caisson étanche (24).

14. Dispositif selon la revendication 13, caractérisé par le fait que le premier support mobile (132) est monté pivotant dans le caisson étanche (24), autour d'un troisième axe (134) parallèle à l'axe des ouvertures alignées (27,30).

15. Dispositif selon la revendication 14, caractérisé par le fait que le deuxième support mobile (40) est monté basculant dans le caisson étanche (24), autour d'un deuxième axe (44) orthogonal à l'axe des ouvertures alignées (27,30).

16. Dispositif selon la revendication 14, caractérisé par le fait que le deuxième support mobile (48) est monté coulissant dans le caisson étanche (24) selon un quatrième axe (150) parallèle à l'axe des ouvertures alignées, et pivotant autour de ce quatrième axe.

17. Dispositif selon l'une quelconque des revendications précédentes, caractérisé par le fait que la porte (32) est montée sur un troisième support mobile (34) placé à l'intérieur du caisson étanche (24) de façon à pouvoir tourner autour de son axe propre.

18. Dispositif selon la revendication 17, caractérisé par le fait que le troisième support mobile forme un deuxième bras, monté basculant autour d'un cinquième axe (98) orthogonal à l'axe des ouvertures alignées (27,30).

19. Dispositif selon la revendication 18, caractérisé par le fait que les moyens de manoeuvre comprennent des moyens (106) pour commander un basculement du deuxième bras (34) autour du cinquième axe et des moyens (108) pour commander une rotation de la porte (32) autour de son axe propre.

20. Dispositif selon la revendication 19, caractérisé par le fait que les moyens (108) pour commander une rotation de la porte (32) agissent sur cette dernière au travers de moyens de transmission de mouvement (110,112,114) logés dans le deuxième bras (34).

21. Dispositif selon la revendication 19, caractérisé par le fait que les moyens (108) pour commander une rotation de la porte (32) comprennent un deuxième ringard coulissant (120) qui traverse le caisson étanche (34) et agit sur la porte au travers de deuxièmes moyens de crabotage (128).

22. Dispositif selon la revendication 17, combinée avec l'une quelconque des revendications 12 à 16, caractérisé par le fait que le troisième support mobile (148) est monté pivotant dans le caisson étanche (24) autour d'un sixième axe (150) parallèle à l'axe des ouvertures alignées.

23. Dispositif selon la revendication 22, caractérisé par le fait que les moyens de manoeuvre comprennent des moyens (160) pour commander un pivotement du troisième support mobile (148) autour du sixième axe (150) et des moyens (176) pour commander une rotation de la porte (32) autour de son axe propre et une translation de la porte selon cet axe.

24. Dispositif selon l'une quelconque des revendications précédentes, caractérisé par le fait que les moyens de manoeuvre comprennent des actionneurs (62,54,106,108,136,138,162,164,176,188) qui sont tous placés à l'extérieur du caisson étanche (24).

## Claims

1. Interface device for the transfer of fluid products between two containers (10, 18), comprising a tight chamber (24) having two aligned openings (27, 30), a door (32) and a transfer tube (36) formed from at least two sections (38, 40) and placed in said chamber, as well as manipulating means (62, 54, 106, 108, 136, 138, 162, 164, 176, 188) able to displace the door and the transfer tube between an inoperative position, in which the door (32) seals a first (30) of the openings and the transfer tube (36) is retracted in the tight chamber, laterally with respect to the aligned openings, and a transfer position, in which the door (32) is retracted into the chamber (24), laterally with respect to the aligned openings (27, 30), and the transfer tube (36) connects the containers (10, 18) in tight manner coaxially to the openings (27, 30), characterized in that the two sections (38, 40) of the transfer tube have a substantially uniform and identical internal cross-section and are placed end to end in the transfer position.

2. Device according to claim 1, characterized in that a first (38) of the sections of the transfer tube (36) is mounted so as to pivot about a first axis (52) orthogonal to the axis of said section and cooperates with the second opening (27) and with the second section (40) by spherical bearing surfaces (80, 82) in the transfer position.

3. Device according to claim 2, characterized in that the spherical bearing surfaces (80, 82) are clearance-free bearing surfaces.

4. Device according to claim 2, characterized in that the tight chamber (240 has a flexible, annular portion (84) connecting a partition of the chamber, in which is formed the second opening (27) to a tube (26) of the chamber, internally defining said second opening, means (85) for taking up clearances, acting in the direction of the axis of the openings (27, 30), being interposed between said partition and said tube.

5. Device according to claim 2, characterized in that at least one of the elements constituted by the first section (38), the second section (40) and the tight chamber (24) have at least one flexible portion (84), the first section (38) cooperating with the second section (40) and with the second opening (27) by cam-forming means (86, 88), which bring the spherical bearing surfaces into contact whilst deforming the flexible portion, when the first section (38) arrives in the transfer position.

6. Device according to either of the claims 2 and 3, characterized in that at least one of the elements constituted by the first section (38), the second section (40) and the tight chamber (24) has at least one flexible portion (84), inflating means (92) acting on said flexible portion in order to bring the spherical bearing surfaces (80, 82) into contact when the first section (38) occupies the transfer position.

7. Device according to any one of the claims 2 to 6, characterized in that the first section (38) is mounted so as to pivot on a first mobile support (42) located within the tight chamber (24) and also carrying the second section (40).

8. Device according to claim 7, characterized in that the first mobile support forms an arm (42), mounted in tilting manner in the tight chamber (24) about a second axis (44) orthogonal to the axis of said aligned openings (27, 30).

9. Device according to claim 8, characterized in that the manipulating means comprise means for controlling a tilting of the arm (42) about the second axis and means (64) for controlling a pivoting of the first section (38) on the arm about the first axis (52).

10. Device according to claim 9, characterized in that the means (64) for controlling a pivoting of the first section on the arm act on said first section (38) through movement transmission means (54) located in the arm.

11. Device according to claim 9, characterized in that the means for controlling a pivoting of the first section (38) on the arm (42) comprise a sliding poker (66), which traverses the tight chamber (24) and acts on the first section through dog clutch means (70).

12. Device according to claim 7, characterized in that the first mobile support (132) is mounted in sliding manner in the tight chamber (24) in accordance with a third axis (134) parallel to the axis of the aligned openings (27, 30) and pivoting about said third axis.

13. Device according to any one of the claims 2 to 6, characterized in that the first section (38) is mounted so as to pivot on a first mobile support (132) located within the tight chamber (24), the second section (40) being carried by a second mobile support (42) placed within the tight chamber (24).

14. Device according to claim 13, characterized in that the first mobile support (132) is mounted in pivoting manner in the tight chamber (24) about a third axis (134) parallel to the axis of the aligned openings (27, 30).

15. Device according to claim 14, characterized in that the second mobile support (40) is mounted so as to tilt in the tight chamber (24) about a second axis (44) orthogonal to the axis of the aligned openings (27, 30).

16. Device according to claim 14, characterized in that the second mobile support (48) is mounted in sliding manner in the tight chamber (24) according to a fourth axis (150) parallel to the axis of the aligned openings and pivoting about said fourth axis.

17. Device according to any one of the preceding claims, characterized in that the door (32) is mounted on a third mobile support (34) within the tight chamber (24) so as to be able to pivot about its own axis.

18. Device according to claim 17, characterized in that the third mobile support forms a second arm mounted so as to tilt about a fifth axis (98) orthogonal to the axis of the aligned openings (27, 30).

19. Device according to claim 18, characterized in that the manipulating means comprise means (106) for controlling a tilting of the second arm (34) about the fifth axis and means (108) for controlling a rotation of the door (32) about its own axis.

20. Device according to claim 19, characterized in that the means (108) for controlling a rotation of the door (32) act on the latter through movement transmission means (110, 112, 114) housed in the second arm (34).

21. Device according to claim 19, characterized in that the means (108) for controlling a rotation of the door (32) comprise a second sliding poker (120) traversing the tight chamber (34) and acting on the door through second dog clutch means (128).

22. Device according to claim 17, combined with any one of the claims 12 to 16, characterized in that the third mobile support (148) is mounted in pivoting manner in the tight chamber (24) about a sixth axis (150) parallel to the axis of the aligned openings.

23. Device according to claim 22, characterized in that the manipulating means comprise means (160) for controlling a pivoting of the third mobile support (14) about the sixth axis (150) and means (176) for controlling a rotation of the door (32) about its own axis and a translation of the door in accordance with said axis.

24. Device according to any one of the preceding claims, characterized in that the manipulating means comprise actuators (62, 54, 106, 108, 136, 138, 162, 164, 176, 188), all of which are located outside the tight chamber (24).

## Patentansprüche

1. Verbindungsvorrichtung für die Übertragung flüssiger Produkte zwischen zwei Behältern (10,18), ein dichtes Gehäuse (24) mit zwei fluchtenden Öffnungen (27,30), eine Tür (32) und ein Übertragungsrohr (36) umfassend, gebildet durch wenigstens zwei in diesem Gehäuse angeordnete Teilstücke (38,40), und Betätigungseinrichtungen (62,54,106,108,136,138,162,176,188), um die Tür und das Übertragungsrohr zu verschieben zwischen einer Ruhestellung, in der die Tür (32) eine erste (30) der Öffnungen verschließt und das Übertragungsrohr (36) in dem dichten Gehäuse in bezug auf die fluchtenden Öffnungen seitlich entfernt ist, und einer Übertragungsstellung, in der die Tür (32) in dem Gehäuse (24) in bezug auf die fluchtenden Öffnungen (27,30) seitlich entfernt ist, und das Übertragungsrohr (36) die Behälter (10,18) in abdichtender Weise koaxial zu den Öffnungen (27,30) verbindet,
**dadurch gekennzeichnet,**
daß die beiden Teilstücke (38,40) des Übertragungsrohrs einen im wesentlichen gleichförmigen und identischen Innenquerschnitt aufweisen und in der Übertragungsstellung stumpf zusammenstoßen.

2. Vorrichtung nach Anspruch 1, dadurch gekennzeichnet, daß ein erstes (38) der Teilstücke des Übertragungsrohrs (36) schwenkbar um eine erste, zur Achse dieses Teilstücks senkrechte Achse (52) montiert ist und mit der zweiten Öffnung (27) und mit dem zweiten Teilstück (40) in der Übertragungsstellung durch Kugelauflageflächen (80,82) zusammenwirkt.

3. Vorrichtung nach Anspruch 2, dadurch gekennzeichnet, daß die Kugelauflageflächen (80,82) spielfreie Auflageflächen sind.

4. Vorrichtung nach Anspruch 2, dadurch gekennzeichnet, daß das dichte Gehäuse (24) einen nachgiebigen Teil (84) umfaßt, der eine Wand des Gehäuses, in der die zweite Öffnung (27) ausgebildet ist, mit einem Rohr (26) des Gehäuses verbindet, das diese zweite Öffnung innen umgrenzt, wobei Spielbeseitigungseinrichtungen (85), die in der Richtung der Achse der Öffnungen (27,30) wirken, eingefügt werden zwischen die genannte Wand und das genannte Rohr.

5. Vorrichtung nach Anspruch 2, dadurch gekennzeichnet, daß wenigstens eines der durch das erste Teilstück (38), das zweite Teilstück (40) und dem dichten Gehäuse (24) gebildeten Elemente wenigstens einen nachgiebigen Teil (84) umfaßt, wobei das erste Teilstück (38) mit dem zweiten Teilstück (40) und mit der zweiten Öffnung (27) durch nockenbildende Einrichtungen (86,88) zusammenwirkt, die die Kugelauflageflächen durch Verformung des nachgiebigen Teils in Kontakt bringen, wenn das erste Teilstück (38) die Übertragungsstellung erreicht.

6. Vorrichtung nach einem der Ansprüche 2 und 3, dadurch gekennzeichnet, daß wenigstens eines der durch das erste Teilstück (38), das zweite Teilstück (40) und das dichte Gehäuse (24) gebildeten Elemente zumindest einen nachgiebigen Teil (84) und Aufblaseinrichtungen (92) umfaßt, die auf den besagten nachgiebigen Teil wirken, um die Kugelauflageflächen (80,82) in Kontakt zu bringen, wenn das erste Teilstück (38) die Übertragungsstellung einnimmt.

7. Vorrichtung nach einem der Ansprüche 2 bis 6, dadurch gekennzeichnet, daß das erste Teilstück (38) schwenkbar auf einen ersten beweglichen Träger (42) montiert ist, der sich im Innern des dichten Gehäuses (24) befindet und ebenfalls das zweite Teilstück (40) trägt.

8. Vorrichtung nach Anspruch 7, dadurch gekennzeichnet, daß der bewegliche Träger einen in dem dichten Gehäuse (24) angebrachten Arm (42) bildet, schwenkbar um eine zweite, zu der Achse der genannten fluchtenden Öffnungen (27,30) rechtwinklige Achse (44).

9. Vorrichtung nach Anspruch 8, dadurch gekennzeichnet, daß die Betätigungseinrichtungen Einrichtungen umfassen, um ein Kippen des Arms (42) um die zweite Achse zu steuern, und Einrichtungen (64), um ein Schwenken des ersten Teilstücks (38) auf dem Arm (42) um die erste Achse (52) zu steuern.

10. Vorrichtung nach Anspruch 9, dadurch gekennzeichnet, daß die Einrichtungen (64) zu Steuern einer Schwenkbewegung des ersten Teilstücks (38) auf dem Arm (42) auf dieses erste Teilstück durch Bewegungsübertragungseinrichtungen (54) wirken, die in dem Arm untergebracht sind.

11. Vorrichtung nach Anspruch 9, dadurch gekennzeichnet, daß die Einrichtungen zum Steuern einer Schwenkbewegung des ersten Teilstücks (38) auf dem Arm (42) eine gleitende Stange (66) umfaßt, die das dichte Gehäuse (24) durchquert und auf das erste Teilstück durch Klauenkupplungseinrichtungen (70) wirkt.

12. Vorrichtung nach Anspruch 7, dadurch gekennzeichnet, daß der erste bewegliche Träger (132) gleitend entsprechend einer dritten, zu der Achse der fluchtenden Öffnungen (27,30) parallelen Achse (134) und schwenkbar um diese dritte Achse in das dichte Gehäuse (24) montiert ist.

13. Vorrichtung nach einem der Ansprüche 2 bis 6, dadurch gekennzeichnet, daß das erste Teilstück (38) schwenkbar auf einen ersten beweglichen Träger (132) montiert ist, der sich im Innern des dichten Gehäuses (24) befindet, wobei das zweite Teilstück (40) durch einen zweiten in Innern des dichten Gehäuses befindlichen beweglichen Träger (42) getragen wird.

14. Vorrichtung nach Anspruch 13, dadurch gekennzeichnet, daß der erste bewegliche Träger (132) schwenkbar um eine zu der Achse der fluchtenden Öffnungen (27,30) parallele dritte Achse (134) in das dichte Gehäuse (24) montiert ist.

15. Vorrichtung nach Anspruch 14, dadurch gekennzeichnet, daß der zweite bewegliche Träger (40) kippbar um eine zu der Achse der fluchtenden Öffnungen (27,30) senkrechte zweite Achse (44) in das dichte Gehäuse (24) montiert ist.

16. Vorrichtung nach Anspruch 14, dadurch gekennzeichnet, daß der zweite bewegliche Träger (48) gleitend entsprechend einer zu der Achse der fluchtenden Öffnungen parallelen vierten Achse (150) und schwenkbar um diese vierte Achse in das dichte Gehäuse (24) montiert ist.

17. Vorrichtung nach einem der vorangehenden Ansprüche, dadurch gekennzeichnet, daß die Tür (32) auf einen dritten beweglichen Träger (34) montiert ist, der im Innerne des dichten Gehäuses (24) so angebracht ist, daß er sich um seine eigene Achse drehen kann.

18. Vorrichtung nach Anspruch 17, dadurch gekennzeichnet, daß der dritte bewegliche Träger einen zweiten Arm bildet, der um eine zu der Achse der fluchtenden Öffnungen (27,30) senkrechte Achse schwenkbar ist.

19. Vorrichtung nach Anspruch 18, dadurch gekennzeichnet, daß die Betätigungseinrichtungen Einrichtungen (106) zum Steuern einer Kippbewegung des zweiten Arms (34) um die fünfte Achse und Einrichtungen (108) zum Steuern einer Drehbewegung der Tür (32) um ihre eigene Achse umfassen.

20. Vorrichtung nach Anspruch 19, dadurch gekennzeichnet, daß die Einrichtungen (108) zum Steuern einer Drehbewegung der Tür (32) auf diese letztere durch Bewegungsübertragungseinrichtungen (110,112,114) wirken, die in dem zweiten Arm (34) untergebracht sind.

21. Vorrichtung nach Anspruch 19, dadurch gekennzeichnet, daß die Einrichtungen (108) zum Steuern einer Drehbewegung der Tür (32) eine zweite gleitende Stange (120) umfassen, die das dichte Gehäuse (24) durchquert und auf die Tür durch zweite Klauenkupplungseinrichtungen (128) wirkt.

22. Vorrichtung nach Anspruch 17, kombiniert mit einem der Ansprüche 12 bis 16, dadurch gekennzeichnet, daß der dritte bewegliche Träger (148) schwenkbar um eine zu der Achse der fluchtenden Öffnungen parallele sechste Achse (150) in das dichte Gehäuse (24) montiert ist.

23. Vorrichtung nach Anspruch 22, dadurch gekennzeichnet, daß die Betätigungseinrichtungen Einrichtungen (160) zum Steuern einer Schwenkung des dritten beweglichen Träger (148) um die sechste Achse (150) umfaßt, und Einrichtungen (176) zu Steuern einer Drehung der Tür (32) um ihre eigene Achse und einer Verschiebung der Tür in dieser Achse.

24. Vorrichtung nach einem der vorangehenden Ansprüche, dadurch gekennzeichnet, dar, die Betätigungseinrichtungen Wirkglieder (62,54,106,108,136,138,162,164,176,188) umfassen, die sich alle außerhalb des dichten Gehäuses (24) befinden.
